# EUROPEAN PATENT APPLICATION

(11) **EP 1 705 053 A2**
(43) Date of publication of application: **27.09.2006**
(21) Application number: 06004513.5
(22) Date of filing: 06.03.2006
(51) Int. Cl.: B60K 37/06, B60N 2/46

(54) **Palmrest**

(30) Priority: 24.03.2005 JP 2005086982
(71) Applicant: Toyota Jidosha Kabushiki Kaisha, Toyota-shi, Aichi-ken, 471-8571 (JP)
(72) Inventor: Sakakibara, Kimio, Toyota-shi Aichi-ken, 471-8571 (JP)
(74) Representative: Winter, Brandl, Fürniss, Hübner Röss, Kaiser, Polte Partnerschaft Patent- und Rechtsanwaltskanzlei

(57) **Abstract**

At a console box, a control switch cluster, at which plural control switches for vehicle-mounted equipment are plurally provided, is disposed in a range in which operation thereof by the fingers of an occupant sitting on a front seat is possible. A palmrest, for the occupant to rest their palm on when operating the control switches with their fingers, is disposed rearward of the control switch cluster. An opening portion is formed in the palmrest. The opening portion communicates with an air outlet portion of an air-conditioning unit via a duct which is connected with the air outlet portion. With this structure, air is blown out from the opening portion of the palmrest, and comfort of the occupant can be improved.

## Description

### BACKGROUND OF THE INVENTION

### Field of the Invention

The present invention relates to structure of a palmrest, which is to be employed in a vehicle which is equipped therewith in order that an occupant seated at a vehicle seat can rest a palm at the palmrest.

### Description of the Related Art

A structure is known in which a center console portion is disposed sideward of and adjacent to a vehicle seat, at which center console portion, rearward of various switches for vehicle-mounted equipment, a palmrest is provided for an occupant to rest the palm of a hand on when operating the switches with their fingers (see, for example, Japanese Patent Application Laid-Open (JP-A) No. 2002-211277).

However, with conventional technology as described above, the palm may become sweaty due to contact with the palmrest, and there is room for improvement in regard to comfort.

### SUMMARY OF THE INVENTION

In consideration of the circumstances described above, an object of the present invention is to provide a palmrest which is capable of improving comfort of a vehicle occupant.

In order to achieve this object, a palmrest relating to a first aspect of the present invention includes: an opening portion formed in the palmrest, the palmrest being for an occupant seated at a vehicle seat to rest a palm on; and a communication channel which communicates with an air outlet portion of a vehicle air-conditioning apparatus.

With the palmrest of the first aspect of the present invention, air which is supplied through the communication channel from the vehicle air-conditioning apparatus is blown out through the opening portion formed in the palmrest, and blows on the palm of the occupant. As a result, the palm of the occupant is prevented from becoming sweaty (i.e., drying of the palm is promoted), and the occupant resting the palm on the palmrest is prevented from experiencing discomfort.

Thus, with the palmrest of the above-described first aspect, comfort of the occupant can be improved. Herein, the palmrest on which the palm of the occupant sitting on the vehicle seat is to be rested is provided at, for example, a center console portion, a center cluster portion, an armrest portion, a door trim portion or the like.

A palmrest relating to a second aspect of the present invention for achieving the object described above is for an occupant seated at a vehicle seat to rest a palm at, the palmrest including: an opening portion; and a communication channel which communicates between the opening portion and an air outlet portion of a vehicle air-conditioning apparatus, wherein the palmrest is disposed rearward of a switch location portion at which a control switch for a vehicle-mounted device is provided, the control switch being disposed in a range which enables operation by a finger of the occupant seated at the vehicle seat.

With the palmrest of the above-described second aspect, the occupant sitting on the vehicle seat rests the palm at the palmrest, which is disposed rearward of the switch location portion, at times of finger operation of control switches provided at the switch location portion. Consequently, switch operations can be performed safely and reliably. Air which is supplied through the communication channel from the vehicle air-conditioning apparatus is blown out through the opening portion formed in the palmrest, and this air blows on the palm of the occupant that is rested on the palmrest. As a result, the palm of the occupant is prevented from becoming sweaty (i.e., drying of the palm is promoted), and the occupant resting the palm on the palmrest is prevented from experiencing discomfort.

Thus, with the palmrest of the second aspect of the present invention, it is possible to improve comfort of the occupant. Herein, the switch location portion, which is disposed in a range in which operation by the fingers of the occupant seated at the vehicle seat is possible, and the palmrest are provided at, for example, a center console portion, a center cluster portion, an armrest portion, a door trim portion or the like. Further, the control switches can include, beside switches which switch between on and off, control knobs for continuously varying outputs, and the like.

At a palmrest of the first or second aspect of the present invention, the palmrest may be provided with a control portion of an adjustment apparatus, which is for adjusting amounts of air blowing through the opening portion.

With the palmrest described above, because the control portion of the adjustment apparatus is provided at the palmrest, it is possible to easily adjust an amount of air blowing through the opening portion of the palmrest, without operating the air-conditioning apparatus.

Further, with the palmrest described above, the control portion of the adjustment apparatus may be formed so as to be operably exposed through the opening portion.

With the palmrest described above, because the control portion which is controlled by the occupant at the adjustment apparatus is exposed through the opening portion, it is possible to adjust air amounts that are being blown out while the occupant is experiencing an airflow (air current) that is blowing out through the opening portion. Therefore, adjustment to a desired air-blowing amount is easier.

In the palmrest described above, the adjustment apparatus may be structured to include: a control portion, which is disposed at an inner side of an edge portion of the opening portion and is tumingly operated; a feed mechanism (transmission mechanism) including structure in which a thread portion and a nut portion are threadingly engaged, one of the thread portion and the nut portion being coaxially joined with the control portion, and the other thereof being fixed to the palmrest; and a valve portion which alters an air passage area at the opening portion in accordance with a relative position of the thread portion and the nut portion of the feed mechanism.

With the palmrest described above, when the occupant turningly operates the control portion, the relative position of the thread portion and the nut portion changes, and area of an air passage portion formed between the valve portion and the opening portion (a valve seat) is altered. Thus, the amount of air being blown out can be finely adjusted with ease, by rotary control of the control portion.

In the palmrest described above, the adjustment apparatus may include structure so as to be capable of blocking communication between the opening portion and the communication channel.

With the palmrest described above, when it is not required for air to blow out through the opening portion of the palmrest, it is possible to stop air blowing out through the opening portion, by blocking communication between the opening portion and the communication channel with the adjustment apparatus. Therefore, it is possible to realize a structure for blocking blowing of air to the palmrest without providing a damper or the like at the air-conditioning apparatus.

A palmrest relating to the present invention as described hereabove has an excellent effect in that it is possible to improve comfort of an occupant.

### BRIEF DESCRIPTION OF THE DRAWINGS

Figure 1 is a side sectional view of a console box structure relating to an embodiment of the present invention.
Figure 2 is a side sectional view, in which principal elements are shown enlarged, of the console box structure relating to the embodiment of the present invention.
Figure 3A is a view showing an adjustment apparatus which structures the console box structure relating to the embodiment of the present invention, and is a side sectional view of a state in which air-blowing is allowed.
Figure 3B is a view showing the adjustment apparatus which structures the console box structure relating to the embodiment of the present invention, and is a side sectional view of a state in which air-blowing is stopped.
Figure 4 is a perspective view of a console box main body structuring the console box structure relating to the embodiment of the present invention.

### DETAILED DESCRIPTION OF THE INVENTION

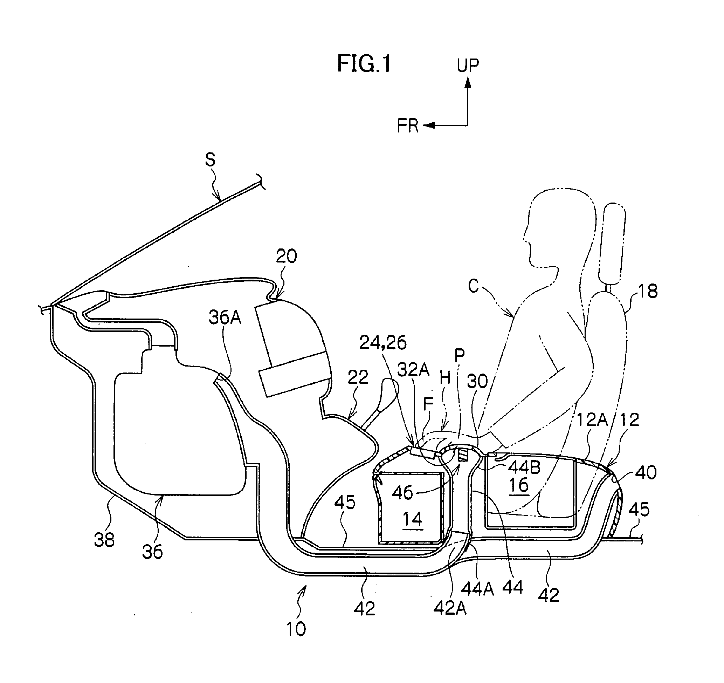

A console box structure 10, at which a palmrest relating to an embodiment of the present invention is employed, will be described on the basis of Figures 1 to 4. Herein, arrows FR and UP, which are shown where appropriate in the drawings, represent a forward direction (a direction of progress) and an upward direction, respectively, of an automobile S which is equipped with the console box structure 10.

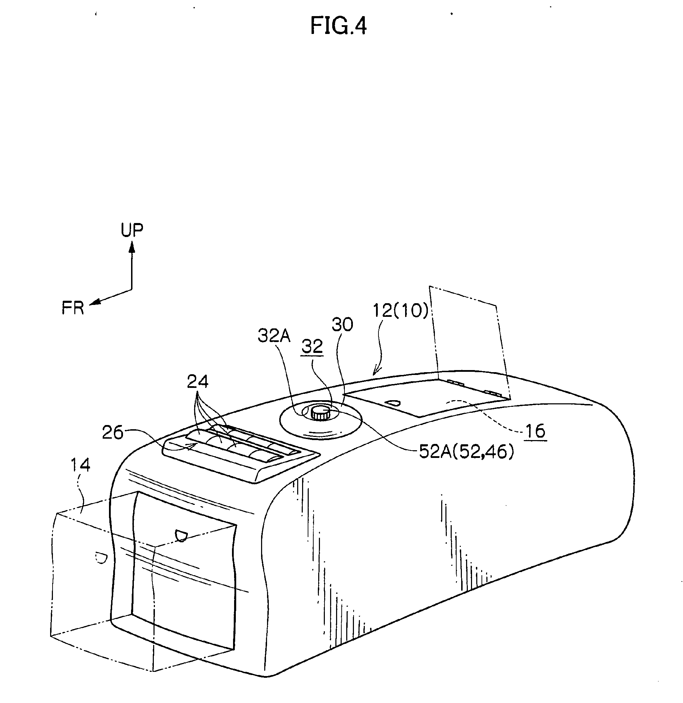

Figure 1 shows a front portion of the vehicle S, which includes the console box structure 10, in a schematic side sectional view. Figure 4 shows a console box main body 12, which structures the console box structure 10, in perspective view. As is shown in these drawings, the console box main body 12 is formed in a substantially cuboid box shape with length in a front-rear direction of the vehicle. A drawer-type storage portion 14, an openable-type storage portion 16 and suchlike are formed in the console box main body 12.

This console box main body 12 is disposed between left and right front seats 18, which are vehicle seats, and is adjacent to the respective vehicle width direction inner side of each front seat 18. A center cluster 22 is disposed forward of the console box main body 12. The center cluster 22 is provided to protrude rearward from a vehicle width direction central portion of an instrument panel 20.

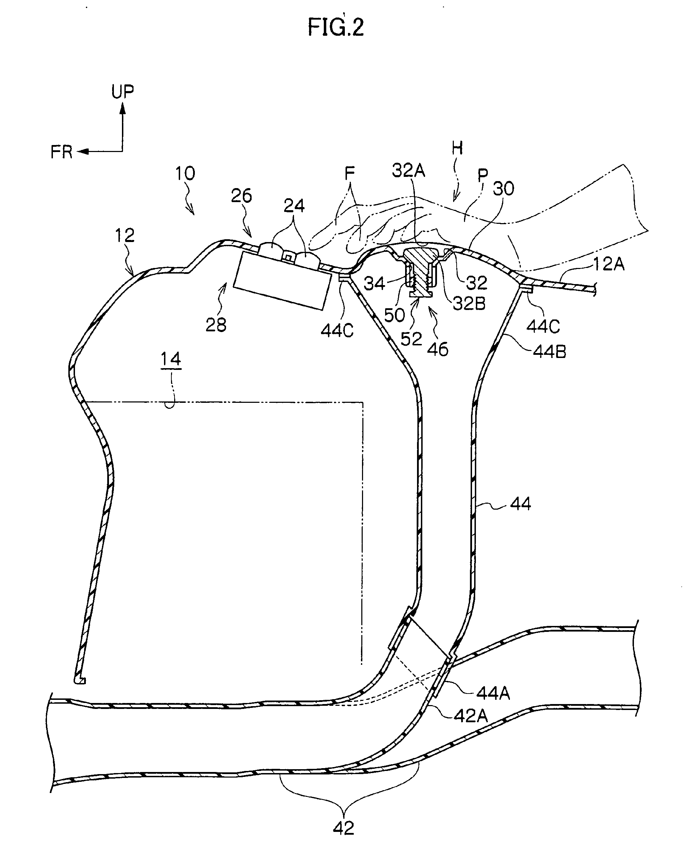

A control switch group 26 is arranged at a forward portion of an upper face of the console box main body 12. The control switch group 26 is a switch location portion constituted by a plurality of control switches 24. As is shown enlarged in Figure 2, the control switches 24 constituting the control switch group 26 are provided at a switch assembly 28, which is disposed inside the console box main body 12. The control switches 24 penetrate through an upper wall 12A of the console box main body 12 and are operably exposed from the upper side of the upper wall 12A. The respective control switches 24 are switches for control (setting) of, for example, a car audio system, an air-conditioning unit and a navigation system.

A palmrest 30 is disposed at the console box main body 12, rearward of the control switch group 26. The palmrest 30 is formed by protrusion of the upper wall 12A. As shown in Figures 1 and 2, the palmrest 30 is disposed at a position such that, in a state in which an occupant C seated in the front seat 18 has rested a palm P at the palmrest 30, the occupant C can operate the control switches 24 with their fingers (i.e., fingertips) F. Thus, the palmrest 30 serves for positioning of a hand H (the palm P and the fingers F) relative to the console box main body 12.

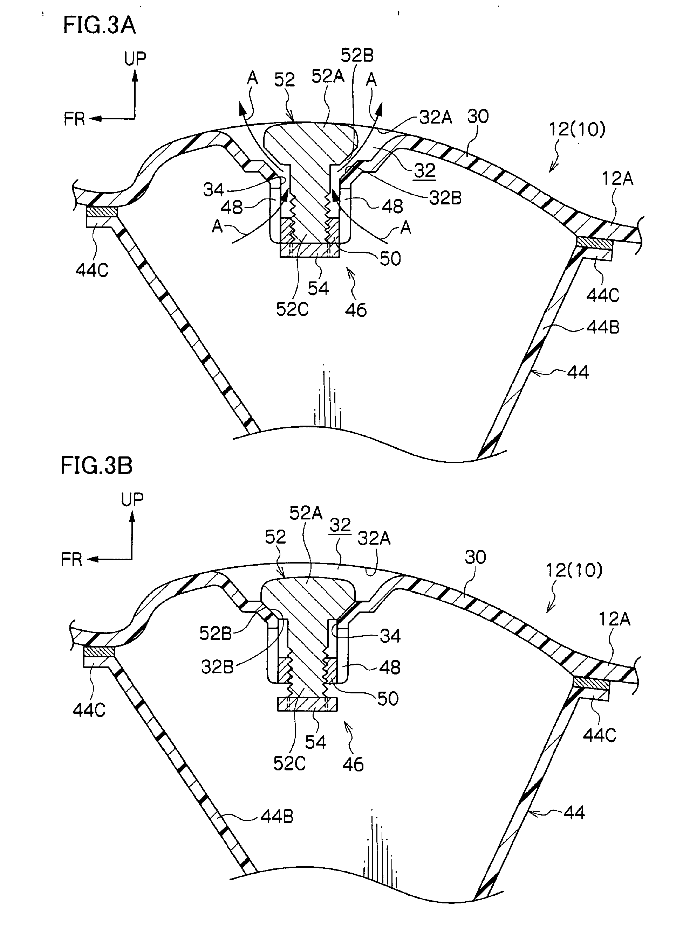

A recess portion 32 is provided at a substantially central portion (a peak portion) of the palmrest 30. The recess portion 32 is formed in a substantially conical shape which opens upward. An upper end of this recess portion 32 serves as an opening portion 32A. As shown in Figure 3A, a through-hole 34, which penetrates through the upper wall 12A in a plate thickness direction, is formed at a bottom portion of the recess portion 32. That is, the through-hole 34 communicates between the interior of the console box main body 12 and the recess portion 32 (and the opening portion 32A). The through-hole 34 is further communicated with an air outlet portion 36A of an air-conditioning unit 36, which serves as a vehicle air-conditioning apparatus.

More specifically, as shown in Figure 1, the air-conditioning unit 36 is disposed between the instrument panel 20 and a dash panel 38. A rear seat duct 42, for supplying air-conditioning air to a rear seat air-blowing outlet 40, is connected to the one air outlet portion 36A of the air-conditioning unit 36. The rear seat air-blowing outlet 40 is provided at a vicinity of an upper-rear corner portion of the console box main body 12 to face toward a rear seat. The rear seat duct 42 is mostly disposed at a lower side of a floor 45, that is, below the console box main body 12.

A branching portion 42A is formed at the rear seat duct 42 below the through-hole 34. A lower end 44A of a palmrest duct 44 is connected to the branching portion 42A. In the present embodiment, as shown in Figure 2, the lower end 44A of the palmrest duct 44 is connected to the branching portion 42A by being externally fitted thereto. This branching portion 42A can be included in the term "an air outlet portion of a vehicle air-conditioning apparatus" of the present invention.

An upper end 44B of the palmrest duct 44 is formed in a tapered shape whose diameter broadens upward. A flange 44C is provided extending to a radial direction outer side from an opening end of the upper end 44B. The flange 44C is joined to a substantially flat region of a lower face of the upper wall 12A, which region is located at an outer side of the palmrest 30, by adhesion or the like. Thus, a structure is formed in which, when the air-conditioning unit 36 is operating and the air outlet portion 36A is open, air-conditioning air is emitted through the air outlet portion 36A, passes through the rear seat duct 42, the branching portion 42A, the palmrest duct 44 and the through-hole 34, and is blown out through the opening portion 32A of the recess portion 32 to outside the console box main body 12.

The console box structure 10 is also provided with an airflow amount regulation device 46, which serves as an adjustment apparatus, for regulating amounts of air-conditioning air that are blown out through the opening portion 32A. As shown in Figures 3A and 3B, the airflow amount regulation device 46 is provided at the upper wall 12A of the console box main body 12 with a plurality of leg portions 48, a nut member 50 and a valve member 52. The leg portions 48 are pendent from an edge portion of the through-hole 34 and are separated in a circumferential direction. The nut member 50 is retained by lower ends of the plurality of leg portions 48. The valve member 52 threadingly engages with the nut member 50.

The valve member 52 is structured to include a handle portion 52A, a valve portion 52B and a thread portion 52C. The handle portion 52A is formed in a short cylindrical shape and provided at an upper end of the valve member 52, and serves as a control portion. The valve portion 52B is formed, at a lower end outer peripheral portion of the handle portion 52A, in a tapering shape which is capable of fitting tightly to a lower portion (below referred to as a valve seat 32B) of the substantially conical recess portion 32. The thread portion 52C protrudes downward from a central portion of the handle portion 52A and threadingly engages with the nut member 50. This airflow amount regulation device 46 is a structure in which the valve portion 52B moves toward and away from the valve seat 32B when the handle portion 52A of the valve member 52 is tumingly operated to alter a relative position of the thread portion 52C with respect to the nut member 50 (and the palmrest 30). In other words, the thread portion 52C (a threaded shaft portion) serves as a threaded shaft of the valve member 52, and the nut member 50 and thread portion 52C structuring the airflow amount regulation device 46 constitute a feed screw mechanism, which is a feed mechanism of the present invention.

Thus, with the airflow amount regulation device 46, it is possible to adjust a blowing cross-section area, that is, an amount of air that is blown out from the through-hole 34, by rotary control of the handle portion 52A. Further, the airflow amount regulation device 46 closes off the through-hole 34 (i.e., blocks communication between the opening portion 32A and the palmrest duct 44) when the valve portion 52B abuts (tightly fits) against the valve seat 32B as shown in Figure 3B. Thus, the airflow amount regulation device 46 is a structure which is capable of preventing air blowing out through the opening portion 32A. Accordingly, in the console box structure 10, because blowing of air from the opening portion 32A can be stopped by the airflow amount regulation device 46, it is possible to provide, for example, a damper for stopping blowing of air from the rear seat air-blowing outlet 40 downstream of the branching portion 42A.

A disc-form stopper 54 is attached to a lower end of the thread portion 52C of the valve member 52. This stopper 54 prevents disengagement of the valve member 52 from the nut member 50. Hence, at the airflow amount regulation device 46, in a state in which the stopper 54 abuts against the nut member 50 (and/or the leg portions 48) as shown in Figure 3A, the valve portion 52B and the valve seat 32B are maximally separated, the airflow amount regulation device 46 is maximally opened and the amount of air blowing out is maximized. Here, the arrows A shown in Figure 3A represent paths of blowing of air.

Next, operation of the present embodiment will be described.

At the console box structure 10 with the structure described above, as shown in Figure 1, when the occupant C sitting on the front seat 18 is operating the control switches 24 of the control switch group 26 provided at the upper face of the front portion of the console box main body 12, the palm P rests at the palmrest 30 while the control switches 24 are operated with the fingertips F. Therefore, a position of the hand H of the occupant C, who is resting the palm P at the palmrest 30 provided at the console box main body 12, is stable with respect to the control switches 24 which are also provided at the console box main body 12 (i.e., the hand H is positioned at the console box main body 12), and stable, reliable operation of the control switches 24 by the fingertips F is possible.

Hence, in a state in which the air-conditioning unit 36 is operating, air-conditioning air (cool air, warm air or simply air from outside), which is supplied through the rear seat duct 42, the palmrest duct 44 and the through-hole 34 from the air-conditioning unit 36, blows out at this palmrest 30, through the opening portion 32A of the recess portion 32. This air-conditioning air blows on the palm P of the occupant C which is rested on the palmrest 30, and prevents the palm P from becoming sweaty (i.e., promotes drying of the palm P).

The palm P is susceptible to becoming sweaty due to contact with the palmrest 30 in, for example, a summery situation in which a cabin interior temperature is relatively high, or the like. However, the palm P is prevented from becoming sweaty by cool air blowing out from the opening portion 32A, and the palm P is kept in a state in which the occupant C experiences comfort. Furthermore, the cool air that blows on the palm P is warmed by heat exchange with the palm P before flowing toward the fingertips F. Therefore, the fingertips will not be cooled.

Thus, with the console box structure 10 at which the palmrest structure relating to the present embodiment of the invention is employed, the palm P resting at the palmrest 30 is prevented from becoming sweaty, and comfort of the occupant C can be improved.

Further, the occupant C can adjust an air-blowing amount from the opening portion 32A to a desired amount by suitably tumingly operating the handle portion 52A of the valve member 52. At such a time, because the handle portion 52A is disposed in the recess portion 32 (the opening portion 32A) of the palmrest 30, the occupant C can operate the handle portion 52A with one hand while experiencing the air current (airflow) of which the blowing amount is being adjusted at the palm P, rather than operating a control portion of the air-conditioning unit 36. Thus, the occupant C can adjust the air-blowing amount from the opening portion 32A to a desired amount with ease. Moreover, because the airflow amount regulation device 46 employs a feed screw mechanism in which the valve portion 52B moves toward/away from the valve seat 32B in accordance with relative positions of the thread portion 52C with respect to the nut member 50, it is possible to finely adjust air-blowing amounts with ease by rotary operation of the handle portion 52A.

Anyway, for the embodiment described above, an example has been illustrated in which the palmrest of the present invention is employed at the console box structure 10. However, the present invention is not limited thus. For example, the control switch group 26 may be disposed at the center cluster 22, the front seat 18, a rear seat armrest, a door trim or the like, with the palmrest 30 being disposed rearward of the control switch group 26. As a further example, the control switch group 26 may be disposed at the center cluster 22 with the palmrest 30 being provided at a front portion of the console box main body 12 (center console). As yet another example, the palmrest 30 may be provided independently of any control switches, at a rear seat armrest or the like. Thus, structures which include dedicated ducts communicating with the air-conditioning unit 36 for blowing air-conditioning air from the palmrest 30 are possible.

Furthermore, for the embodiment described above, an example has been illustrated which is provided with the rotary operation-type'airflow amount regulation device 46 which utilizes a feed screw mechanism. However, the present invention is not limited thus. For example, a structure is also possible in which a shutter member which opens and closes a window portion by moving along an area of formation of the window portion is operated by turning, sliding or the like of a control portion. As another example, a control portion of the adjustment apparatus (a portion corresponding to the handle portion 52A), may be disposed adjacent to the control switch group 26 so as to be operable by the fingertips F in the state in which the palm P is resting at the palmrest 30.

Further still, for the embodiment described above, an example has been illustrated in which the airflow amount regulation device 46 is a mechanical valve apparatus in which a valve portion (the valve portion 52B) is directly operated by control of a control portion (the handle portion 52A). However, the present invention is not limited thus. For example, it is possible to employ an electrical control-type adjustment apparatus which includes a valve body (a damper), which is driven by a motor at a dedicated air outlet portion for the palmrest at a palmrest duct or the air-conditioning unit 36, a control knob disposed in a vicinity of the palmrest 30, which serves as a control portion, and a control device, which controls so as to alter a valve opening in accordance with operation amounts of the control knob.

## Claims

1. A palmrest for an occupant seated at a vehicle seat to rest a palm at, the palmrest comprising: an opening portion; and a communication channel which communicates between the opening portion and an air outlet portion of a vehicle air-conditioning apparatus.

2. A palmrest for an occupant seated at a vehicle seat to rest a palm at, the palmrest comprising: an opening portion; and a communication channel which communicates between the opening portion and an air outlet portion of a vehicle air-conditioning apparatus, wherein the palmrest is disposed rearward of a switch location portion at which a control switch for a vehicle-mounted device is provided, the control switch being disposed in a range which enables operation by a finger of the occupant seated at the vehicle seat.

3. The palmrest of claim 2, further comprising an adjustment apparatus for adjusting an amount of air blowing through the opening portion, a control portion of the adjustment apparatus being disposed at the palmrest.

4. The palmrest of claim 3, wherein the control portion of the adjustment apparatus is operably exposed through the opening portion.

5. The palmrest of claim 4, wherein the adjustment apparatus comprises:
the control portion, which is disposed at an inner side of an edge portion of the opening portion and can be operated so as to turn;
a feed mechanism including structure in which a thread portion and a nut portion are threadingly engaged, one of the thread portion and the nut portion being coaxially joined with the control portion, and the other thereof being fixed to the palmrest; and
a valve portion which alters an air passage area at the opening portion in accordance with a relative position of the thread portion and the nut portion of the feed mechanism.

6. The palmrest of claim 3, wherein the adjustment apparatus comprises structure capable of blocking communication between the opening portion and the communication channel.

7. A palmrest for an occupant seated at a vehicle seat to rest a palm at, the palmrest comprising an opening portion which communicates with an air outlet portion of a vehicle air-conditioning apparatus and blows air, the palmrest being disposed in a vicinity of a switch location portion, at which a control switch for a vehicle-mounted device is provided, for enabling operation of the control switch by a finger in a state in which the occupant is resting the palm at the palmrest.

8. The palmrest of claim 7, further comprising an adjustment apparatus for adjusting an amount of air blowing through the opening portion.

9. The palmrest of claim 8, wherein the adjustment apparatus comprises a control portion therefor, the control portion being disposed to be exposed at the opening portion of the palmrest.

10. The palmrest of claim 9, wherein the adjustment apparatus comprises:
the control portion, which is disposed at an inner side of an edge portion of the opening portion and can be operated so as to turn;
a mechanism in which a thread portion and a nut portion are threadingly engaged, one of the thread portion and the nut portion being coaxially joined with the control portion, and the other thereof being fixed at the opening portion;
and a valve portion which alters an air passage area at the opening portion in accordance with a relative position of the thread portion and the nut portion.

11. The palmrest of claim 8, wherein the adjustment apparatus comprises structure capable of blocking communication between the opening portion and the air outlet portion of a vehicle air-conditioning apparatus.
